# EUROPÄISCHE PATENTANMELDUNG

(11) **EP 1 132 413 A1**
(43) Veröffentlichungstag der Anmeldung: **12.09.2001**
(21) Anmeldenummer: 01104449.2
(22) Anmeldetag: 26.02.2001
(51) Int. Cl.: C08G 18/08, C08G 18/12, C08G 18/66, C09D 175/04, C09D 5/20, C08F 283/00

(54) **Abziehlacke**

(30) Priorität: 08.03.2000 DE 10011277
(71) Anmelder: BAYER AG, 51368 Leverkusen (DE)
(72) Erfinder: Müller, Hanns-Peter Dr., 51519 Odenthal (DE); Gruttmann, Horst, 51375 Leverkusen (DE); Petzoldt, Joachim Dr., 40789 Monheim (DE); Müller, Heino, 51377 Leverkusen (DE); Irle, Christoph Dr., 41539 Dormagen (DE)

(57) **Zusammenfassung**

Die vorliegende Erfindung betrifft Abziehlacke aus mindestens zwei in Wasser dispergierten Komponenten A und B, wobei die Komponente A ein Polyurethan-Polyharnstoff und die Komponente B ein Polymerisat ist.

## Beschreibung

Die vorliegende Erfindung betrifft Abziehlacke aus mindestens zwei in Wasser dispergierten Komponenten vom Typ A und B, wobei die Komponente A ein Polyurethan-Polyharnstoffund die Komponente B ein Polymerisat ist.

Wässrige Beschichtungsmittel, welche zum Schutz hochwertiger Güter, insbesondere zum Schutz von Lackoberflächen z. B. von Kraftfahrzeugen geeignet sind, sind bekannt. DE-A 19 653 585 betrifft colöserfreie, wässrige, anionische Polyurethan-Dispersionen, die auch zum temporären Schutz von hochwertigen Gebrauchsgütern als Abziehlacke Verwendung finden. Die Reißfestigkeit und die Dehnbarkeit der Lackschichten sind bereits relativ hoch.

Aus WO 98/23692 sind Mischungen einer wässrigen Copolymerisat-Dispersion aus Acrylestern mit einer wässrigen Ethen/Vinylacetat-Copolymer Dispersion bekannt, die als Abziehlack eingesetzt werden.

Die Mischungen liefern einen seidenmatten Schutzüberzug, der abziehbar ist. Im Test mit 36 %iger Schwefelsäure bei 65°C ergibt sich, dass die mit dem Schutzüberzug versehene Klarlack-Oberfläche vor einer ersten, optisch wahrnehmbaren Schädigung mindestens 30 Minuten länger geschützt ist als die ungeschützte Klarlack-Oberfläche.

Acrylat-Dispersionen alleine erzeugen in der Regel Beschichtungen, die hoch wetterfest, aber steif und spröde sind. Weiche Acrylate besitzen geringe Reißfestigkeiten und Weiterreißfestigkeiten. Der Zusatz thermoplastischer Copolymere von Olefinen mit Vinylestern bewirkt eine Reduzierung der Steifigkeit und Sprödigkeit der Acrylat-Dispersionen.

Thermoplastische Copolymere von Olefinen mit Vinylestern sind aber in der Regel nicht wetterstabil. Außerdem erzeugt die Mischung einen seidenmatten Film.

Abziehlacke aus Polyurethan-Dispersionen, wie sie in DE-A 19 653 585 beschrieben sind, erfüllen zwar die Forderung nach Transparenz, Wetterfestigkeit und Abziehfähigkeit. Härte, Dehnung und Abziehfähigkeit derartiger Lackschichten sind aber noch verbesserungswürdig.

In der DE-A 19 943 933 werden Gemische aus mindestens zwei untereinander verträglichen, colöserfreien, wässrigen anionischen Dispersionen A und B von Polyurethan-Polyharnstoffen beansprucht, die diesbezüglich bereits verbesserte Eigenschaften aufweisen. Der Preis für derartige hochwertige Mischungen liegt allerdings hoch.

Es besteht von den Anwendern derartiger Lacke der Wunsch nach höherer Härte, geringer Dehnbarkeit und guter Reiß- und Weiterreißfestigkeit der Lackschichten, und der Wunsch nach höherem Festkörpergehalt der als Abziehlacke angewendeten Dispersionen. Die Lacke sollten von den verschiedensten Substraten z.B. Glas, Kunststoffen und Autodecklacken leichter abziehfähig sein als die des Standes der Technik.

Der vorliegenden Erfindung lag daher die Aufgabe zugrunde, wässrige Polymerdispersionen für Abziehlacke zur Verfügung zu stellen, die einerseits einen hohen Festkörpergehalt aufweisen, als Film transparent, wetterstabil und chemikalienfest sind und mechanisch alle Anforderungen an einen Abziehlack erfüllen, sich also von den Substraten leicht abziehen lassen und darüber hinaus zu wirtschaftlichen Bedingungen herstellbar sind.

Diese Aufgabe wird durch die Bereitstellung der im folgenden näher beschriebenen Dispersionen gelöst.

Polyurethan-Polyacrylat-Dispersionen sind lange bekannt und werden bevorzugt als "waterborne coatings" zur Herstellung von gut haftenden Basislacken verwendet. Daher ist es besonders überraschend und war für Fachleute nicht vorhersehbar, dass die erfindungsgemäßen Mischungen und auch die im folgenden näher beschriebenen erfindungsgemäßen Hybriddispersionen (durch in situ Herstellung von Polyacrylat in Polyurethanen) zu neuartigen Abziehlacken mit vorzüglicher Mechanik und Abziehfähigkeit führen.

Gegenstand der vorliegenden Erfindung ist daher eine lichtechte wässrige Abziehlack-Dispersion, bestehend aus in wässriger Phase dispergierten Komponenten vom Typ A und B wobei die Komponenten A lichtechte Polyurethan-Polyharnstoffe und die Komponenten B Polymerisate radikalisch polymerisierbarer Monomere sind und die Mengenverhältnisse so gewählt werden, dass 40 bis 90 Gew.-% A und 10 bis 60 Gew.-% B zum Einsatz gelangen, wobei sich die Gew.-% jeweils auf den Harzfestkörper beziehen und auf 100 Gew.-% ergänzen.

Gegenstand der vorliegenden Erfindung ist ferner eine lichtechte, colöserfreie wässrige Abziehlack-Dispersion, bestehend aus mindestens zwei in wässriger Phase dispergierten Komponenten A und B, gekennzeichnet dadurch, dass A das zumindest teilweise in der Salzform vorliegende Umsetzungsprodukt enthält aus
a) einem NCO-Prepolymer aus
   i) 20 bis 60 Gew.-% eines Diisocyanates ausgewählt aus der Gruppe der aliphatischen Diisocyanate, cycloaliphatischen Diisocyanate, und Mischungen daraus,
   ii) 20 bis 78 Gew.-% eines Makrodiols mit einem Molekulargewicht von 500 bis 10 000 und Gemische daraus,
   iii) 2 bis 12 Gew.-% 2,2 Bis-(hydroxymethyl)-alkan-monocarbonsäuren, bevorzugt Dimethylolpropionsäure,
   iv) 0 bis 15 Gew.-% kurzkettiger Diole mit einem Molekulargewicht von 62 bis 400,
   v) 0 bis 10 Gew.-% monofunktioneller Alkohole als Kettenregler mit einem Molekulargewicht von 32 bis 350,
b) 0 bis 15 Gew.-% Diamine des Molekulargewichtsbereichs 60 bis 300 als Kettenverlängerer,
c) 0 bis 10 Gew.-% Kettenregler, ausgewählt aus der Gruppe der Monoamine, Alkanolamine und Ammoniak,
d) 0 bis 3 Gew.-% Wasser und
e) 0,1 bis 10 Gew.-% Neutralisationsmittel,
wobei sich die genannten Prozentangaben zu 100 % ergänzen,
und einer Komponente B, dadurch gekennzeichnet, dass B ein durch radikalische wässrige Emulsionspolymerisation olefinisch ungesättigter Verbindungen hergestelltes Polymerisat ist.

Bevorzugt ist die Komponente B ein Polymerisat mit einer Glasübergangstemperatur von über 10°C, besonders bevorzugt über 20°C.

Die Mengenverhältnisse werden so gewählt, dass 40 - 90, bevorzugt 60 - 80 Gew.-% A und 10 - 60, bevorzugt 20 - 40 Gew.-% B zum Einsatz gelangen, wobei sich die Gew.-% jeweils auf den Harzfestkörper beziehen und auf 100 Gew.-% ergänzen.

Gegenstand der Erfindung ist auch ein Verfahren zur Herstellung der erfindungsgemäßen lichtechten Beschichtungsmittel, dadurch gekennzeichnet, dass man mindestens zwei verschiedene colöserfreie, wässrige Dispersionen A und B getrennt herstellt und anschließend die wässrigen Dispersionen von A und B bevorzugt in Mischungsverhältnissen von 60 - 80 Gew.-% Dispersion A und 20 - 40 Gew.-% Dispersion B mischt, wobei sich die Gew.-% jeweils auf den Harzfestkörper beziehen und auf 100 Gew.-% ergänzen.

Die Herstellung der Dispersion aus den Komponenten A und B kann auch dadurch erfolgen, dass die Herstellung der Polymerisat-Dispersion durch radikalische Emulsionspolymerisation in Gegenwart der Polyurethan-Dispersion erfolgt.

Gegenstand der Erfindung ist auch die Verwendung der Gemische der wässrigen Dispersionen A und B als hochglänzende, lichtechte, wetterfeste Abziehlacke zum temporären Schutz von Kraftfahrzeugen, Eisenbahnen, Schiffen, Möbeln, Metallgegenständen, mineralischen Gegenständen, Glas- und Kunststoffgegenständen und beliebigen anderen Substraten durch Tauchen, Rakeln, Gießen, Sprühen, Spritzen, Pinseln und anschließendes Trocknen bei 20 bis 100°C, bevorzugt 20 bis 80°C, durch Wärmestrahlung, Warmluft oder Infrarotlicht, Mikrowellenbestrahlung oder Beschallung.

Die erfindungsgemäßen Überzüge sind wasserfeste, transparente, reißfeste, UV-beständige, temperaturbeständige, gegen Niederschläge (organischer oder anorganischer Natur) beständige, gegebenenfalls pigmentierte Beschichtungen, die einerseits auf den Substraten haften, anderseits durch Abziehen leicht entfernt werden können.

Gegenstand der Erfindung ist auch die Verwertung der gebrauchten, abgezogenen erfindungsgemäßen Lackschichten als Recyclat, dadurch gekennzeichnet, dass man die gebrauchten, abgezogenen Lackschichten gegebenenfalls nach vorhergehender Reinigung mechanisch zerkleinert und anschließend in heizbaren Pressen zu Platten verpresst oder die zerkleinerten Lackschichten im Extruder zu thermoplastischen Endlossträngen extrudiert und die erhaltenen Stränge nach bekannten Granuliermethoden zu Zylinder-, Kugel-, Linsen- oder Rautengranulaten verarbeitet.

Gegenstand der Erfindung ist schließlich die Verwendung der erhaltenen Granulate zur Herstellung von technischen Artikeln aus thermoplastischen Elastomeren durch weiteres Verarbeiten in bekannten Verfahren der Kunststofftechnik, z.B. durch Spritzgießen, Blasformen, Tiefziehen, Slush-modling oder Flachextrusion.

Die erfindungsgemäßen Dispersionen A bestehen aus den nachstehend näher beschriebenen Komponenten.

Als Komponente a) i) werden bevorzugt aliphatische und/oder cycloaliphatische Diisocyanate verwendet, wie z. B. Isophorondiisocyanat (IPDI), 4,4'-Dicyclohexylmethandiisocyanat, 1-Methyl-2,4-diisocyanato-cyclohexan und 1-Methyl-2,6-diisocyanato-cyclohexan in beliebigen Mischungsverhältnissen, 1,6-Hexamethylen-diisocyanat und/oder 1,3-Cyclohexan-diisocyanat.

Die Mitverwendung von geringen Anteilen an aromatischen Diisocyanaten wie z. B. 2,4- und 2,6-Toluoldiisocyanat oder 2,4'- und 4,4'- Diphenylmethandiisocyanat ist ebenfalls möglich.

Als Komponente a) ii) werden Makrodiole mit einem Molekulargewicht von 500 bis 10 000 eingesetzt. Hierbei handelt es sich bevorzugt um Polyesterdiole durch Umsetzung von Dicarbonsäuren mit Diolen, gegebenenfalls unter Zuhilfenahme üblicher Veresterungskatalysatoren, vorzugsweise nach dem Prinzip einer Schmelz- oder Azeotropkondensation bei Temperaturen von 140 - 240°C.

Beispiele geeigneter Säuren oder Anhydride sind Adipinsäure, Bernsteinsäure(anhydrid), Maleinsäure(anhydrid), Sebacinsäure, Azelainsäuren, die unterschiedlichsten handelsüblichen Dimerfettsäuren (in hydrierter und nicht hydrierter Form), Phthalsäure(anhydrid), Isophthalsäure, Tetrahydrophthalsäure(anhydrid), 1,4-Cyclohexandicarbonsäure, Hexahydrophthalsäure(anhydrid). Als Diole kommen die technisch verfügbaren Diole zum Einsatz, wie z. B. Ethylenglykol, 1,2- und 1,3-Propandiol, 1,3- und 1,4-Butandiol, 1,6-Hexandiol, Diethylenglykol, Dipropylenglykol, Neopentylglykol oder Mischungen derartiger Diole. Bevorzugt sind Polyesterdiole aus Adipinsäure, Hexandiol und Neopentylglykol.

Ebenfalls geeignet sind Polycarbonatdiole, Polyacrylatdiole (z.B. Tegomer® BD 1000, (Tego Chemie Service GmbH, DE)), Polybutadiendiole, Polycaprolactondiole, Hydroxypolytetrahydrofurane oder Hydroxypolyether auf Basis von Propylenoxid.

Geeignete Polycarbonatdiole werden z. B. erhalten, indem Kohlensäurederivate, wie z. B. Diphenylcarbonat oder Phosgen mit Alkoholen, vorzugsweise Diolen der genannten Art, umgesetzt werden.

Die mittlere Molmasse dieser Polyole liegt zwischen 500 und 10 000, bevorzugt zwischen 700 und 4000, besonders bevorzugt sind Makrodiole mit Molmassen zwischen 1000 und 2500.

Die Ausgangskomponenten a) ii) können auch olefinisch ungesättigte Einheiten enthalten.

Bei den Ausgangskomponenten a) iii) handelt es sich bevorzugt um 2,2-Bis-(hydroxymethyl)-alkan-monocarbonsäuren mit insgesamt 5 - 8 Kohlenstoffatomen, d. h. Verbindungen der allgemeinen Formel (I) 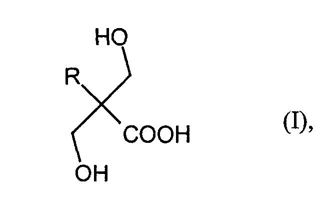 in welcher
- R: für einen Alkylrest mit 1 - 4 Kohlenstoffatomen steht.

Ganz besonders bevorzugt ist 2,2-Dimetylolpropionsäure.

Als Ausgangskomponente a) (iv) kommen die beschriebenen kurzkettigen Diole vom Molekulargewicht 62 - 400 in Betracht. Besonders bevorzugt ist 1,4-Butandiol.

Als Ausgangskomponente a) v) kommen in Betracht, Methanol, Ethanol, Butanol, Hexanol, 2-Ethylhexanol, Oktanol und Dodecanol und beliebige Alkohole des Molekulargewichts 32 bis 350. Geeignet sind auch olefinisch ungesättigte Alkohole wie z. B. Hydroxyethylacrylat, Hydroxyethylmethacrylat, Hydroxypropylmethacrylat oder Allylalkohol.

Als Komponente b) können alle aliphatischen und/oder cycloaliphatischen Verbindungen verwendet werden, die mindestens zwei gegenüber Isocyanaten reaktive Aminogruppen tragen. Hierfür in Frage kommen insbesondere Ethylendiamin, Propylendiamin, Hexamethylendiamin, Isophorondiamin, p-Xylylendiamin, 4,4'-Diamino-dicyclohexylmethan und 4,4'-Diamino-3,3'-dimethyldicyclohexylmethan.

Als Komponente c) kommen zum Beispiel Ammoniak, monofünktionelle Amine, wie Methylamin, Ethylamin, n-Propylamin, Isopropylamin und Cyclohexylamin, Octylamin, Diethylamin, Dibutylamin, sowie Aminoalkohole wie Ethanolamin, Diethanolamin und Propanolamin in Betracht.

Als Neutralisationsmittel e) sind zum Beispiel Ammoniak, N-Methylmorpholin, Dimethylisopropanolamin, Triethylamin, Dimethylethanolamin, Methyldiethanolamin, Triethanolamin, 2-Amino-2-methyl-1-propanol, Morpholin, Tripropylamin, Ethanolamin, Diethanolamin, Triisopropanolamin, N-Ethyl-diisopropylamin und Gemische daraus geeignet.

In einer bevorzugten Ausführungsform werden die Komponenten a) (i), (ii) und (iii) in einem Reaktor vorgelegt und unter wasserfreien Bedingungen in einem Temperaturbereich von 50 - 150 °C, bevorzugt 50 - 110 °C, umgesetzt. Danach wird abgekühlt und dem Ansatz technisch reines Aceton sowie das kurzkettige Diol (iv) von MG 62-400 und gegebenenfalls monofunktionelle Alkohole (v) zugegeben und solange erhitzt, bis der NCO-Gehalt der Mischung auf einen Wert von 65 bis 85 %, bevorzugt 75 bis 80 % des berechneten NCO-Gehalts gefallen ist. Auf diese Weise entsteht das NCO-Prepolymer. Danach wird der Ansatz mit weiterem Aceton verdünnt und mit der berechneten Menge eines Gemisches aus Diamin und Kettenabbrecher - gelöst in Wasser - versetzt. Auf diese Weise setzt man 90 % der NCO-Gruppen mit dem Kettenverlängerer, dem Diamin und dem Kettenabbrecher um. Das verbleibende Isocyanat lässt man mit dem vorhandenen Wasser zum Polyurethan-Polyhamstoff abreagieren.

An Stelle des Acetons können zur Verdünnung des Präpolymers auch andere dem Fachmann bekannte organische Lösemittel mit geeignetem Siedepunkt eingesetzt werden. Geeignet sind z. B. Methylethylketon oder (cyclo)aliphatische Kohlenwasserstoffe. Die Mitverwendung in der Dispersion verbleibender Lösemittel wie z.B. N-Methylpyrrolidon, Dipropylenglykol-dimethylether oder Methoxypropylacetat ist ebenfalls möglich.

In einer weiteren bevorzugten Ausführungsform werden zur Verdünnung radikalisch polymerisierbare Monomere eingesetzt. Hierfür sind die unten genannten Monomere geeignet, die auch für die Herstellung der Komponente B Verwendung finden.

Die Polymeraufbaureaktion wird bevorzugt ohne die Verwendung von Katalysatoren durchgeführt, es ist aber auch möglich, die in der Isocyanatchemie bekannten Katalysatoren einzusetzen (z. B. tert.-Amine wie Triethylamin, Zinnverbindungen wie Zinn-II-octoat, Dibutylzinndilaurat u. a. gebräuchliche Katalysatoren).

Nach Erreichen des gewünschten Umsatzes, z. B. wenn kein NCO mehr nachweisbar ist (IR-Kontrolle), gibt man dem Ansatz die berechnete Menge Neutralisationsmittel, bevorzugt Ammoniaklösung zu, so dass 30 bis 100 % bevorzugt, 40 bis 60 % der vorliegenden Carboxylgruppen durch den Ammoniak neutralisiert werden.

Durch Zugabe von Wasser und anschließendem Entfernen des eingesetzten Acetons durch Destillation stellt man die gewünschte Festkörperkonzentration ein. Polyurethan-Polyharnstoff-Dispersionen, die nach dem erfindungsgemäßen Verfahren gewonnen werden, besitzen 20 - 60 Gew.-%, bevorzugt 30 - 40 Gew.-% Feststoff in Wasser, ihre mittleren Teilchendurchmesser betragen 20 - 1.000 nm, bevorzugt 50 bis 500 nm.

Die pH-Werte der weißen, erfindungsgemäßen, lagerstabilen Polyurethan-Polyharnstoff-Dispersionen A liegen im Bereich von 6 - 9.

Die Komponente B ist ein durch radikalische wässrige Emulsionspolymerisation olefinisch ungesättigter Monomere hergestelltes Polymerisat.

Geeignete Monomere können z. B. sein: Styrol, (Meth)acrylsäureester mit 1 - 18 C-Atomen im Alkoholrest wie Methylmethacrylat, Butylmethacrylat, Ethylacrylat, Butylacrylat, Cyclohexylacrylat, 2-Ethylhexylacrylat, Stearylacrylat, Di(meth)acrylsäureester von Diolen, z. B. Ethylenglykol, 1,4-Butandiol, 1,6-Hexandiol, außerdem (Meth)acrylsäureamid oder (Meth)acrylsäurenitril sowie Vinlyester aliphatischer Carbonsäuren mit 2 - 12 C-Atomen, z. B. Vinylacetat oder Versaticsäure-Vinylester. Ebenfalls kommen solche Monomere in Frage, die funktionelle Gruppen, zum Beispiel Hydroxy-, Carbonyl- oder Säuregruppen tragen, z.B. Hydroxyethylacrylat, Hydroxyethylmethacrylat, Hydroxypropylmethacrylat, Acetoxyethylmethacrylat, Acrylsäure oder Methacrylsäure.

Die Polymerisation wird nach dem Verfahren der wässrigen Emulsionspolymerisation durchgeführt. Beispielsweise kann man dabei folgendermaßen vorgehen:

Es wird eine durch Radikalstarter initiierte Emulsionscopolymerisation der oben genannten Monomeren durchgeführt. In einer weiteren bevorzugten Ausführungsform wird diese Emulsionspolymerisation in Gegenwart der Polyurethan-Dispersion A durchgeführt. Die Durchführung der Emulsionspolymerisation kann entweder auf die Weise erfolgen, dass man die Polyurethan-Dispersion und/oder eine oberflächenaktive Substanz vorlegt und dann die Monomeren und den Initiator über einen bestimmten Zeitraum, z. B. zwischen 0,5 und 6 Stunden, getrennt zudosiert, oder aber, dass man einen Teil der Polyurethan-Dispersion und/oder eine oberflächenaktive Substanz vorlegt und den Rest zusammen mit den Monomeren und den Initiator in getrennten Mengenströmen ebenfalls über einen Zeitraum von z. B. 0,5 - 6 h zudosiert. Es kann aber auch so verfahren werden, dass über den gesamten Zeitraum der Polymerisation Polyurethan-Dispersion und/oder eine oberflächenaktive Substanz, Monomere und Initiator getrennt und kontinuierlich zudosiert werden und nur eine bestimmte Menge an Wasser vorgelegt wird. Diese Art der Polymerisation eignet sich aber auch zur Durchführung einer batch-Fahrweise, d. h. Polyurethan-Dispersion und/oder eine oberflächenaktive Substanz, Monomerengemisch und Initiator werden zusammen vorgelegt, auf die gewünschte Polymerisationstemperatur erhitzt und zwischen 2 und 10 h bei dieser Temperatur gehalten.

Als Initiatoren eignen sich z. B. Kaliumperoxodisulfat, Ammoniumperoxodisulfat, organische Peroxide, organische Hydroperoxide, Wasserstoffperoxid sowie bevorzugt Redox-Systeme. Besonders bevorzugte Beispiele sind Redox-Systeme aus wasserlöslichen, Radikale liefernden nichtionogenen Peroxiden wie t-Butylhydroperoxid als Oxidationskomponente und Reduktionskomponenten wie z.B. Formaldehydsulfoxylat oder Ascorbinsäure sowie katalytischen Mengen eines Eisen (II)-Salzes.

Die Emulsionspolymerisation erfolgt im allgemeinen bei Temperaturen zwischen 20°C und 100°C, bevorzugt zwischen 40°C und 80°C.

Nach Beendigung der Polymerisationsreaktion auf die beispielhaft beschriebene Art erhält man eine feinteilige wässrige Polymeremulsion mit einem durch Laser-Korrelationsspektroskopie gemessenen mittleren Teilchendurchmesser zwischen 15 und 500 nm, vorzugsweise zwischen 30 und 150 nm.

Die Dispersion enthält neben Homo- und/oder Copolymeren der zur Polymerisation eingesetzten Monomeren oder Monomergemischen auch Anteile von Pfropfprodukten der Monomeren, die entweder auf Doppelbindungen (über den Einbau ungesättigter OH-Komponenten eingebracht) oder auf die Polymerketten des Polyurethans als Pfropfgrundlage aufgepfropft sind.

Aus den erfindungsgemäßen Dispersionen erhält man hochglänzende, hochtransparente und harte Lackschichten mit hoher Fülle und guter Abziehfähigkeit von den Substraten wie z. B. Glas, Kunststoff, Autodecklack.

Bei der Formulierung der Lacke können die in der Lackchemie üblichen Hilfsmittel, wie z. B. Pigmente, Lichtstabilisatoren, Antiabsetzungsmittel, Verdicker, oberflächenaktive Verbindungen, Entschäumer etc. eingesetzt werden.

Eine gegebenenfalls gewünschte pH-Anpassung der Mischungen kann mit organischen oder anorganischen Basen erfolgen, wie z. B. Ammoniak, Alkalicarbonate, Amine, Aminoalkohole. Dabei sind die organischen Basen bevorzugt. Ganz besonders bevorzugt ist 2-Amino-2-methyl-1-propanol.

Die Applikation der Lacke erfolgt nach den üblichen Methoden der Lacktechnologie durch Tauchen, Rakeln, Gießen, Sprühen, Spritzen, Pinseln oder Walzen. Sie dienen als Abziehlack zum temporären Schutz von Kraftfahrzeugen, Stahl- und Aluminiumprofilen, Glas- und Kunststoffscheiben bzw. Artikeln. Nach Applikation werden die lackierten Teile bei Raumtemperatur oder bei erhöhter Temperatur bis zu 100°C getrocknet.

Die Recyclisierung der gebrauchten, abgezogenen Lackschichten ist sehr einfach. Die gebrauchten, abgezogenen Lackschichten werden, gegebenenfalls nach vorhergehender Reinigung, mechanisch zerkleinert und anschließend unter Anwendung von Temperatur und Druck in heizbaren Pressen zu Platten verpresst oder die zerkleinerten Lackschichten im Extruder unter Anwendung von Temperatur, Scherung und Förderung zu thermoplastischen Endlossträngen extrudiert und die erhaltenen Stränge nach bekannten Granuliermethoden zu Zylinder-, Kugel-, Linsen- oder Rautengranulaten granuliert. Derartige Granulate finden Verwendung zur Herstellung von technischen Artikeln als thermoplastische Elastomere durch weiteres Verarbeiten in bekannten Verfahren der Kunststofftechnik, z. B. durch Spritzgießen, Blasformen, Tiefziehen, Slush-molding oder Flachextrusion.

### Beispiele

### Beispiel 1: Polyurethan-Dispersion

In einem Reaktionsgefäß werden 170 g (0,1 mol) eines Polyesters aus Adipinsäure, 1,6-Hexandiol und Neopentylglykol mit einem durchschnittlichen Molekulargewicht von 1.700 g/mol und 2 % OH, 30 Minuten bei 120°C und 10 mbar unter Rühren entwässert. Unter Stickstoff trägt man 13,4 g (0,1 mol) Dimethylolpropionsäure und 111 g (0,5 mol) Isophorondiisocyanat ein. Nach 1 Stunde Reaktionszeit bei 110°C wird der Ansatz auf 60°C abgekühlt und in 100 g Aceton gelöst. Nach Zugabe von 18 g (0,2 mol) 1,4-Butandiol wird 22 Stunden bei 50°C nachgerührt. Der NCO-Gehalt beträgt 1,60 % (berechnet 2,04 %). Man verdünnt mit 500 g Aceton. Zum NCO-Prepolymer wird bei 50°C eine Mischung aus 10,6 g (0,062 mol) Isophorondiamin, 1,07 g (0,016 mol) 25 %ige Ammoniaklösung und 60 g Wasser gegeben. Anschließend rührt man 5 Stunden bei 50°C nach. Es wird mit 3,4 g (0,05 mol) 25 %iger Ammoniaklösung neutralisiert und mit 450 g Wasser dispergiert. Das Aceton entfernt man bis 50°C und 150 mbar und erhält so eine weiße Dispersion mit einem Feststoffgehalt von 38,8 Gew.-% und einer mittleren Teilchengröße von 346 nm.
Der Neutralisationsgrad beträgt 50 %.

### Beispiel 2: Polyurethan-Dispersion

In einem Reaktionsgefäß werden 170 g (0,1 mol) eines Polyesters aus Adipinsäure, 1,6-Hexandiol und Neopentylglykol mit einem durchschnittlichen Molekulargewicht von 1.700 g/mol und 2 % OH 30 Minuten bei 120°C und 10 mbar unter Rühren entwässert. Unter Stickstoff trägt man 13,4 g (0,1 mol) Dimethylolpropionsäure und 111 g (0,5 mol) Isophorondiisocyanat ein. Nach 1 Stunde Reaktionszeit bei 110°C wird der Ansatz auf 60°C abgekühlt und in 100 g Aceton gelöst. Nach Zugabe von 18 g (0,2 mol) 1,4-Butandiol wird 22 Stunden bei 50°C nachgerührt. Der NCO-Gehalt beträgt 1,66 % (berechnet 2,04 %). Man verdünnt mit 500 g Aceton. Zum NCO-Prepolymer wird bei 50°C eine Mischung aus 9,42 g (0,055 mol) Isophorondiamin, 2,00 g (0,029 mol) 25 %ige Ammoniaklösung und 60 g Wasser gegeben. Anschließend rührt man 5 Stunden bei 50°C nach. Es wird mit 3,4 g (0,05 mol) 25 %iger Ammoniaklösung neutralisiert und mit 450 g Wasser dispergiert. Das Aceton entfernt man bis 50°C und 150 mbar und erhält so eine weiße Dispersion mit einem Feststoffgehalt von 39,2 % und einer mittleren Teilchengröße von 471 nm.
Der Neutralisationsgrad beträgt 50 %.

### Beispiel 3: Polyurethan-Dispersion

Man verfährt wie in Beispiel 1, ersetzt jedoch den Ammoniak als Neutralisationsmittel durch 3,56 g (0,04 mol) Dimethylethanolamin. Nach dem Entfernen des Acetons erhält man eine weiße Dispersion mit einem Feststoffgehalt von 35 % und einer mittleren Teilchengröße von 309 nm.
Der Neutralisationsgrad beträgt 40 %.

### Beispiel 4: Polyurethan-Dispersion

Man verfährt wie in Beispiel 1, neutralisiert jedoch mit 4,08 g (0,06 mol) 25 %iger Ammoniaklösung und dispergiert mit 680 g Wasser. Nach dem Entfernen des Acetons erhält man eine weiße Dispersion mit einem Feststoffgehalt von 31,4 % und einer mittleren Teilchengröße von 183 nm. Der Neutralisationsgrad beträgt 60 %.

### Beispiel 5: Polyurethan-Dispersion

In einem Reaktionsgefäß werden 245,1 g (0,125 mol) eines Polyesters aus Adipinsäure, 1,2-Ethandiol und 1,4-Butandiol mit einem durchschnittlichen Molekulargewicht von 1961 g/mol und 1,73 % OH, 30 Minuten bei 120°C und 10 mbar entwässert. Unter Stickstoff trägt man 16,75 g (0,125 mol) Dimethylolpropionsäure und 131 g (0,5 mol) Dicyclohexylmethan-4,4'-diisocyanat ein. Nach 1 Stunde Reaktionszeit bei 110°C wird der Ansatz auf 80°C abgekühlt und in 250 g Butanon-2 gelöst. Nach Zugabe von 11,25 g (0,125 mol) 1,4-Butandiol wird 12 Stunden bei 80°C nachgerührt. Der NCO-Gehalt beträgt 1,36 % (berechnet 1,61 %). Man verdünnt bei 50°C mit 500 g Aceton. Zum NCO-Prepolymer wird bei 50°C eine Mischung aus 13,6 g (0,08 mol) Isophorondiamin, 1,36 g (0,02 mol) 25 %ige Ammoniaklösung und 100 g Wasser gegeben. Anschließend rührt man 1 Stunde bei 50°C nach. Es wird mit 4,45 g (0,05 mol) Dimethylethanolamin neutralisiert und mit 530 g Wasser dispergiert. Nach dem Entfernen der organischen Lösungsmittel bis 50°C und 150 mbar erhält man so eine weiße Dispersion mit einem Feststoffgehalt von 38,7 % und einer mittleren Teilchengröße von 480 nm.
Der Neutralisationsgrad beträgt 40 %.

### Beispiel 6: Polyurethan-Dispersion

In einem Reaktionsgefäß werden 170 g (0,1 mol) des Polyesters aus Beispiel 1,30 Minuten bei 120°C und 10 mbar unter Rühren entwässert. Unter Stickstoff trägt man 13,4 g (0,1 mol) Dimethylolpropionsäure und 111 g (0,5 mol) Isophorondiisocyanat ein. Nach 1 Stunde Reaktionszeit bei 110°C wird der Ansatz auf 60°C abgekühlt und in 100 g Aceton gelöst. Nach Zugabe von 18 g (0,2 mol) 1,4-Butandiol wird 21 Stunden bei 50°C nachgerührt. Der NCO-Gehalt beträgt 1,63 % (berechnet 2,04 %). Man verdünnt mit 500 g Aceton. Zum NCO-Prepolymer wird bei 50°C eine Mischung aus 1,09 g (0,016 mol) 25 %ige Ammoniaklösung und 60 g Wasser gegeben und 21 Stunden bei 50°C nachgerührt. Es wird mit 3,4 g (0,05 mol) 25 %iger Ammoniaklösung neutralisiert und mit 450 g Wasser dispergiert. Nach dem Entfernen des Acetons bis 50°C und 150 mbar erhält man eine weiße Dispersion mit einem Feststoffgehalt von 39,8 % und einer mittleren Teilchengröße von 210 nm.
Der Neutralisationsgrad beträgt 50 %.

### Beispiel 7: Polyurethan-Dispersion

In einem Reaktionsgefäß werden 765,0 g (0,45 mol) eines Polyesters aus Adipinsäure, 1,6-Hexandiol und Neopentylglykol mit einem durchschnittlichen Molekulargewicht von 1.700 g/mol und 2 % OH, 30 Minuten bei 120°C und 10 mbar unter Rühren entwässert. Unter Stickstoff trägt man 73,7 g (0,55 mol) Dimethylolpropionsäure, 2,8 g (0,03 mol) Ethylenglykol-Monobutylether und 40,5 g (0,45 mol) 1,4-Butandiol ein. Man erhitzt auf 70°C und gibt unter Rühren 455,1 g (2,0 mol) IPDI zu. Nach Aufheizen auf 92°C wird 1 h gerührt. Man kühlt auf 70°C ab und gibt 236,8 g Butylmethacrylat sowie 0,25 g Desmorapid® Z (Bayer AG, DE) zu. Nach weiteren 90 min bei 70°C beträgt der NCO-Gehalt 3,5 %. Man gibt 55,6 g (0,55 mol) Triethylamin zu und lässt weitere 30 min bei 70°C rühren. Die so hergestellte Schmelze wird innerhalb von 10 min unter Rühren in 1740 g Wasser einer Temperatur von 33°C eingetragen. Nach Zugabe der Harzschmelze wird eine Lösung von 16,0 g (0,53 mol) Ethylendiamin und 7,3 g (0,29 mol) Hydrazinhydrat in 193 g Wasser innerhalb 5 min zugegeben. Man erhält eine opake Dispersion mit einem Festgehalt von 36,2 % und einer mittleren Teilchengröße von 68 nm.
Der Neutralisationsgrad beträgt 100 %.

### Beispiel 8: Polyurethan- Polymerisat -Dispersion

In einem Rührgefäß werden 1665 g der Polyurethan-Dispersion aus Beispiel 1 vorgelegt. Unter Rühren fügt man 3,1 g einer Lösung von Ethylendiamin-tetraacetat und Eisen (II)-sulfat (je 1 %ig in Wasser), verdünnt mit weiteren 347 g Wasser, zu. Anschließend gibt man unter Rühren eine Mischung aus 3,3 g einer 70 %igen Lösung von t-Butylhydroperoxid in Wasser und 347 g Wasser zu.

In einem Tropftrichter werden 111 g Butylacrylat sowie 222 g Methylmethacrylat eingewogen (Monomervorlage). In einem weiteren Tropftrichter wird eine Lösung von 1,7 g Formaldehyd-Sulfoxylat in 165 g Wasser eingewogen. Je 25 % der Formaldehyd-Sulfoxylat-Lösung und der Monomervorlage werden nun bei 50°C in 5 min zudosiert. Nach Abklingen der exothermen Reaktion wird der Rest der Monomervorlage und der Formaldehyd-Sulfoxylat-Lösung parallel innerhalb 1 h zudosiert. Dann wird noch 1 h bei 50°C gerührt und abgekühlt. Die erhaltene weiße Dispersion hat einen Festgehalt von 34,5 % und eine mittlere Teilchengröße von 445 nm.

### Beispiel 9: Polyurethan- Polymerisat -Dispersion

In einem Rührgefäß werden 1500 g der Polyurethan-Dispersion aus Beispiel 7 vorgelegt und mit 270 g Wasser verdünnt. Unter Rühren fügt man 1,4 g einer Lösung von Ethylendiamin-tetraacetat und Eisen (II)-sulfat (je 1 %ig in Wasser) zu. Anschließend gibt man unter Rühren eine Mischung aus 0,9 g einer 70 %igen wässrigen Lösung von t-Butylhydroperoxid und 17 g Wasser zu. Bei 50°C wird nun innerhalb 5 min eine Lösung von 0,45 g Formaldehyd-Sulfoxylat in 8,6 g Wasser zugetropft. Anschließend wird noch 2 h bei 50°C gerührt. Die erhaltene opake Dispersion hat einen Festgehalt von 34,2 % und eine mittlere Teilchengröße von 58 nm.

### Beispiel 10: Polymerisat-Dispersion

In einem Rührgefäß werden 560,6 g Wasser und 9,4 g Emulgator 951 (Bayer AG, DE) vorgelegt und auf 75°C aufgeheizt. In einen Tropftrichter werden 248 g Butylacrylat, 248 g Methylmethacrylat und 5,0 g Acrylsäure eingewogen (Monomervorlage). Innerhalb von 5 min werden nun parallel 10,0 g einer 5 %igen wässrigen Lösung von Ammoniumperoxodisulfat in Wasser sowie 10 % der Monomervorlage unter Rühren zudosiert. Nach Abklingen der exothermen Reaktion werden dann gleichzeitig beginnend 50 g einer 1 %-igen Ammoniumperoxodisulfat-Lösung innerhalb 3,5 h und der Rest der Monomer-Vorlage innerhalb 3 h zudosiert. Anschließend wird noch weitere 2 h bei 75°C gerührt. Nach Abkühlen auf Raumtemperatur wird mit einer 25 %-igen wässrigen Ammoniaklösung auf einen pH von 8,0 eingestellt. Die opake Dispersion hat einen Festgehalt von 44,3 % und eine mittlere Teilchengröße von 92 nm.

### Beispiel 11: Polymerisat-Dispersion

In einem Rührgefäß werden 672 g Wasser und 11,3 g Emulgator 951 (Bayer AG, DE) vorgelegt und auf 75°C aufgeheizt. In einen Tropftrichter werden 177 g Butylacrylat, 208 g Methylmethacrylat, 208 g Styrol und 6,0 g Methacrylsäure eingewogen (Monomervorlage). Innerhalb von 5 min werden nun parallel 12,0 g einer 5 %- igen wässrigen Lösung von Ammoniumperoxodisulfat in Wasser sowie 10 % der Monomervorlage unter Rühren zudosiert. Nach Abklingen der exothermen Reaktion werden gleichzeitig beginnend 60 g einer 5 %-igen Ammoniumperoxodisulfat-Lösung innerhalb 3,5 h und der Rest der Monomer-Vorlage innerhalb 3 h zudosiert. Anschließend wird noch weitere 2 h bei 75°C gerührt. Nach Abkühlen auf Raumtemperatur wird mit einer 10 %-igen wässrigen Ammoniaklösung auf einen pH von 8,0 eingestellt. Die opake Dispersion hat einen Festgehalt von 44,8 % und eine mittlere Teilchengröße von 62 nm.

### Beispiel 12: Herstellung eines Abziehlackes

### a) Transparente Formulierung

Von der Polyurethan-Dispersion aus Beispiel 2, 39,2 %-ig, werden 70,9 Gew.-Tle. mit 26,5 Gew.-Tlen. der 44,3 %-igen Polymerisat-Dispersion aus Beispiel 10 unter Rühren vermischt und mit ca. 0,4 Gew.-Tlen. 90 %igem Aminomethylpropanol auf einen pH-Wert von ca. 8,3 eingestellt. Anschließend werden zügig 0,2 Gew.-Tle. eines handelsüblichen Acrylatverdickers wie Borchigel® A LA (Borchers GmbH, Monheim, DE), 10%-ig in dest. Wasser, 1,1 Gew.-Tle. eines 1 %-igen handelsüblichen Entschäumers (Entschäumer E, Bayer AG), 0,5 Gew.-Tle. eines Benetzungsmittels wie Hydropalat® 110 (Cognis BV, Roermond, NL) sowie 0,4 Gew.-Tle. eines wasserverdünnbaren Lichtschutzmittels zugegeben und innig mittels Dissolver vermischt. Das System ist nach einer ca. 8-stündigen Reifezeit bei 23°C einsatzbereit für z.B. eine Airless-Spritzapplikation.

### b) Weiß-lasierende Formulierung

Von der Polyurethan-Dispersion aus Beispiel 2, 39,2 %-ig werden 68,9 Gew.-Tle. mit 24,9 Gew.-Tlen. der 44,3 %-igen Polymerisat-Dispersion aus Beispiel 10 unter Rühren vermischt und mit ca. 0,4 Gew.-Tlen. 90 %-igem Aminomethylpropanol auf einen pH-Wert von ca. 8,3 eingestellt. Anschließend werden zügig 4,6 Gew.-Tle. der nachstehend aufgeführten Anreibepaste, 0,2 Gew.-Tle. eines handelsüblichen Acrylatverdickers wie Borchigel® A LA (Borchers GmbH, Monheim), 10 %-ig in dest. Wasser, 1,1 Gew.-Tle. eines 1 %-igen handelsüblichen Entschäumers (Entschäumer E, Bayer AG), 0,5 Gew.-Tle. eines Benetzungsmittels wie Hydropalat® 110 (Cognis BV, Roermond, NL) sowie 0,4 Gew.-Tle. eines wasserverdünnbaren Lichtschutzmittels zugegeben und innig mittels Dissolver vermischt. Das System ist nach einer ca. 8-stündigen Reifezeit bei 23°C einsatzbereit für eine Airless-Spritzapplikation.

Die Anreibepaste, die nach einer Vordispergierung mittels Dissolver ca. 30 Minuten auf einer Perlmühle unter Kühlung vermahlen wird, besteht aus 42,2 Gew.-Tlen. Dispersion A, 11,8 Gew.-Tlen. Dispersion B, 3,7 Gew.-Tlen. dest. Wasser und 41,5 Gew.-Tlen. Titandioxid wie Tronox® R-KB-4 (Kerr McGee Pigments GmbH & Co. KG, DE) sowie den handelsüblichen Additiven 0,5 Gew.-Tle. Benetzungsmittel Tego® Wet 250 (Tego Chemie Service GmbH, DE) und 0,3 Gew.-Tlen. Antiabsetzmittel wie Aerosil® R 972 (Degussa AG, DE).

| **Eigenschaften von transparenten Abziehlacken auf Basis der Dispersionen A, B und A/B=70:30** | | | |
|---|---|---|---|
| **Beispiel** | **2** | **10** | **12 a)** |
| Bindemittel (Festharze) | Disp. A: 100,0 Gew.Tle | Disp. B: 100,0 Gew. Tle. | Disp. A: 70,0 Gew.Tle. Disp. B: 30,0 Gew.Tle. |
| Festkörpergehalt bei ca. 65 s Auslaufzeit ISO 2431, 5 mm | ca. 39,2 Gew.-% | ca. 44,3 Gew.-% | ca. 40,7 Gew.-% |

| Filme mit ca. 50 um Trockenschichtdicke nach 10 Minuten bei 80°C und 48 Stunden bei 40°C kurzgealtert | | | |
|---|---|---|---|
| Aussehen | klar transparent | stark rissig keine Filmbildung | klar transparent |
| Dehnbarkeit des freien Films | ca. 350 % | 0% | ca. 300 % |

| Abziehfähigkeit (manuelle Prüfung) | | | |
|---|---|---|---|
| von Glas von 2K-Automobil-Klarlack | mäßig bis schwer leicht bis mäßig | nicht bestimmbar nicht bestimmbar | leicht bis mäßig leicht |
| Schutzwirkung des Substrates (2K-Klarlack) Schlüssel: 0 = keine Veränderung, 5 = völlig zerstört | | | |
| FAM*-Test, 10 min RT | 2 | - | 2 |
| 1%-ige NaOH" 30 min 40°C | 0 | - | 0 |
| 1%-ige H2SO4, 30 min 40°C | 0 | - | 0 |
| Pankreatin, 30 min 40°C | 1 | - | 0 |

| | | | |
|---|---|---|---|
| *Mischung aus Xylol : Isooctan : Diisobutylen : Ethanol = 50:30:15:5 Gew.Tlen. | | | |

## Patentansprüche

1. Wässrige Abziehlack-Dispersion, bestehend aus in wässriger Phase dispergierten Komponenten A und B, wobei die Komponenten A lichtechte Polyurethan-Polyharnstoffe und die Komponenten B Polymerisate radikalisch polymerisierbarer Monomere sind und A in einer Menge von 40 - 90 Gew.-% und B in einer Menge von 10 - 60 Gew.-% eingesetzt werden, wobei sich die Anteile in Gew.-% jeweils auf den Harzfestkörper beziehen und zu 100 Gew.-% ergänzen.

2. Abziehlack-Dispersion gemäß Anspruch 1, worin die Komponente A das zumindest teilweise in der Salzform vorliegende Umsetzungsprodukt aus
a) einem NCO-Prepolymer aus
i) 20 bis 60 Gew.-% eines Diisocyanates ausgewählt aus der Gruppe der aliphatischen Diisocyanate, cycloaliphatischen Diisocyanate, und Mischungen daraus,
ii) 20 bis 78 Gew.-% eines Makrodiols mit einem Molekulargewicht von 500 bis 10 000 und Gemische daraus,
iii) 2 bis 12 Gew.-% 2,2 Bis-(hydroxymethyl)-alkan-monocarbonsäuren, bevorzugt Dimethylolpropionsäure,
iv) 0 bis 15 Gew.-% kurzkettiger Diole mit einem Molekulargewicht von 62 bis 400,
v) 0 bis 10 Gew.-% monofunktioneller Alkohole als Kettenregler mit einem Molekulargewicht von 32 bis 350,
b) 0 bis 15 Gew.-% Diamine des Molekulargewichtsbereichs 60 bis 300 als Kettenverlängerer,
c) 0 bis 10 Gew.-% Kettenregler, ausgewählt aus der Gruppe der Monoamine, Alkanolamine und Ammoniak,
d) 0 bis 3 Gew.-% Wasser und
e) 0,1 bis 10 Gew.-% Neutralisationsmittel,
wobei sich die genannten Prozentangaben zu 100 % ergänzen, ist.

3. Abziehlack-Dispersion gemäß Anspruch 2, **dadurch gekennzeichnet, dass** während der Herstellung der Komponente A in der Prepolymerstufe 65 bis 85 %, vorzugsweise 75 bis 80 % des berechneten NCO-Gehalts eingestellt werden und die Dispergierung unter Verwendung von wassermischbaren Lösemitteln, bevorzugt Aceton erfolgt.

4. Abziehlack-Dispersion gemäß Anspruch 1, **dadurch gekennzeichnet, dass** die Herstellung der Komponente A in Gegenwart von olefinisch ungesättigten Monomeren erfolgt und die anschließende Dispergierung lösemittelfrei vorgenommen wird.

5. Abziehlack-Dispersion gemäß Anspruch 1, **dadurch gekennzeichnet, dass** die Komponente B durch radikalische Emulsionspolymerisation hergestellt wird.

6. Abziehlack-Dispersion gemäß Anspruch 1, **dadurch gekennzeichnet, dass** die Komponente B durch radikalische Emulsionspolymerisation in Gegenwart der in Wasser dispergierten Komponente A hergestellt wird.

7. Abziehlack-Dispersion gemäß Anspruch 1, **dadurch gekennzeichnet, dass** die Komponente B ein Polymerisat mit einer Glasübergangstemperatur von über 10°C ist.

8. Abziehlack-Dispersion gemäß Anspruch 1, **dadurch gekennzeichnet, dass** A in einer Menge von 60 bis 80 Gew.-% und B in einer Menge von 20 bis 40 Gew.-% eingesetzt werden, wobei sich die Anteile in Gew.-% jeweils auf den Harzfestkörper beziehen und zu 100 Gew.-% ergänzen.

9. Verfahren zur Herstellung der Abziehlack-Dispersion gemäß Ansprüchen 1 bis 8 **dadurch gekennzeichnet, dass** man wässrige Dispersionen A und B getrennt herstellt sie anschließend in den ausgewählten Mischungsverhältnissen mischt.

10. Verfahren gemäß Anspruch 9, **dadurch gekennzeichnet, dass** man die Herstellung der Polymerisat-Dispersion B durch radikalische Emulsionspolymerisation in Gegenwart der Polyurethan-Dispersion A vornimmt.

11. Verwendung der wässrigen Abziehlack-Dispersionen gemäß Ansprüchen 1 bis 10 als hochglänzende, lichtechte wetterfeste Abziehlacke zum temporären Schutz von Kraftfahrzeugen, Eisenbahnen, Schiffen, Möbeln, Metallgegenständen, mineralischen Gegenständen, Glas- und Kunststoffgegenständen und beliebigen anderen Substraten durch Tauchen, Rakeln, Gießen, Sprühen, Spritzen, Pinseln und anschließendes Trocknen bei 20 bis 100°C bevorzugt 20 bis 80°C, durch Wärme oder Infrarotlicht, Mikrowellenbestrahlung oder Beschallung.

12. Beschichtungen erhältlich aus den Dispersionen gemäß Ansprüchen 1 bis 8.

13. Verfahren zur Recyclierung der abgezogenen Abziehlacke, **dadurch gekennzeichnet, dass** man die abgezogenen Lackschichten, gegebenenfalls nach vorhergehender Reinigung, mechanisch zerkleinert und anschließend unter Anwendung von Temperatur und Druck in heizbaren Pressen zu Platten verpresst oder die zerkleinerten Lackschichten im Extruder unter Anwendung von Temperatur, Scherung und Förderung zu thermoplastischen Endlossträngen extrudiert und die erhaltenen Stränge granuliert.

14. Granulate erhältlich nach dem Verfahren gemäß Anspruch 13.

15. Verwendung der Granulate gemäß Anspruch 14 zur Herstellung von Formkörpern.
